# EUROPEAN PATENT APPLICATION

(11) **EP 2 367 355 A1**
(43) Date of publication of application: **21.09.2011**
(21) Application number: 11163235.2
(22) Date of filing: 31.03.2008
(51) Int. Cl.: H04N 7/173

(54) **Method and apparatus for classifying and displaying RSS information**

(30) Priority: 09.07.2007 KR 20070068885
(62) Divisional of application: 08103232.8
(71) Applicant: Samsung Electronics Co., Ltd., Suwon-si, Gyeonggi-do 442-742 (KR)
(72) Inventor: Kim, Do-young, Gyeonggi-do (KR); Lim, Ji-hoon, Gyeonggi-do (KR)
(74) Representative: Chettle, John Edward

(57) **Abstract**

An image display apparatus and an information providing method using the image display apparatus are provided. The image display apparatus such as a digital TV classifies RSS information, which is provided from a web server, according to the time slot and displays the RSS information in predetermined categories at corresponding time slots on a screen in order to provide a user with the RSS information. Therefore, the user can check desired information easily and rapidly.

## Description

Apparatuses and methods consistent with the present invention relate to providing information using an image display apparatus, and more particularly, to providing information using an image display apparatus such as a digital television (TV) which provides a user with broadcast programs transmitted from a broadcast station.

RSS is a standard for document exchange based on the Extensible Markup Language (XML) for providing users with updated information on web sites, such as news or blogs, in which content is frequently updated. "RSS" is an acronym which refers to Resource Description Framework (RDF) Site Summary, Rich Site Summary or Really Simple Syndication. Using RSS, information and content from sites is automatically published, collected and exchanged on web servers. Additionally, RSS makes it possible to implement services and networks of dynamic and rich content.

Recently, digital TVs which provide users with broadcast programs transmitted from broadcast stations have a function of providing users with information received via communication networks such as the Internet. In other words, a function that was originally performed in personal computers (PCs) may also be performed in image display apparatuses such as digital TVs.

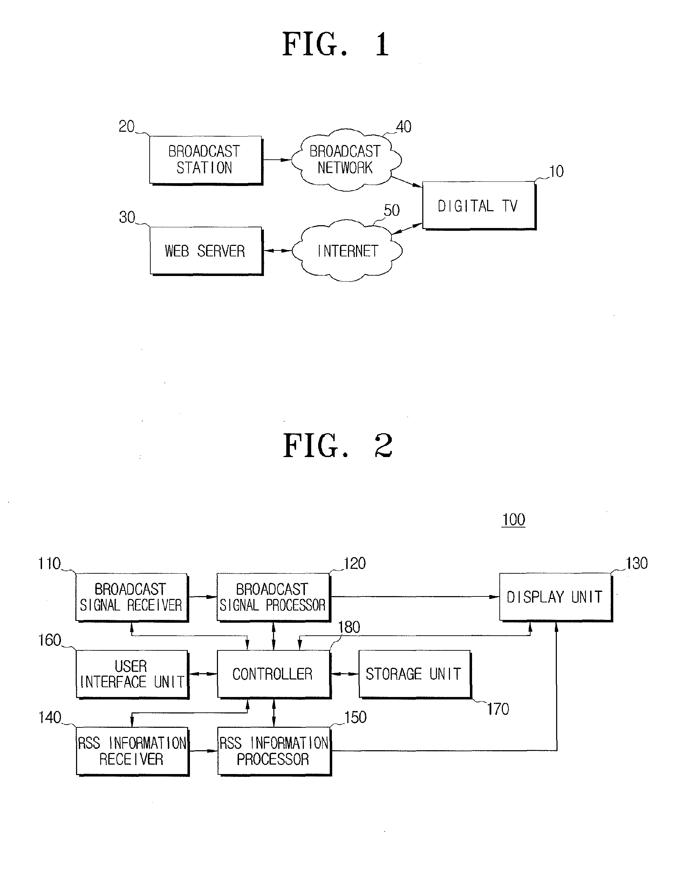

FIG. 1 is a diagram showing a conventional digital TV 10 as an example of an image display apparatus which performs functions of a PC.

Referring to FIG. 1, the conventional digital TV 10 receives a broadcast program from a broadcast station 20 via a broadcast network 40 and provides a user with the received broadcast program. Additionally, the conventional digital TV 10 provides the user with various types of information provided on a web server 30 via the Internet 50 together with the broadcast program. In this situation, the digital TV 10 also receives RSS information from the web server 30 via the Internet 50, and provides the user with the received information in real time.

In order to check updated information through the digital TV 10, the user needs to switch a channel and directly find desired RSS information. In other words, there is a need for the user to check unnecessary RSS information one by one in order to search for the desired RSS information, and accordingly significant time may be required to search for the desired RSS information and the user may experience inconvenience. Additionally, the user may use only RSS information provided on a specific site, so it is impossible to check whether the provided information is the desired RSS information.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides an image display apparatus which automatically sorts RSS information required for each time slot from among RSS information and provides a user with the sorted RSS information so that the user can easily and rapidly check desired information, and a real time information providing method using the image display apparatus.

According to an aspect of the present invention, there is provided an image display apparatus comprising a receiver which receives information from a web server; a controller which controls the information received by the receiver to be classified according to the time slot; and a display unit which displays the information at corresponding time slots on a screen.

The controller may control information contained in a predetermined category to be classified in a predetermined time slot.

The controller may function as a web client which requests the information from the web server.

The time slot may be one of the time of the day, day of the week, month or time of the year.

The image display apparatus may further comprise a broadcast signal receiver which receives a broadcast signal transmitted from a broadcast station; and a broadcast signal processor which performs signal processing so that the broadcast signal may be displayed together with the information on the display unit.

The receiver may receive the information via the Internet.

The information may comprise Really Simple Syndication (RSS) information.

The image display apparatus may further comprise a user interface unit which receives a user command to classify the information in the predetermined category in the predetermined time slot.

According to another aspect of the present invention, there is provided an information providing method of an image display apparatus, the method comprising receiving information from a web server; controlling the received information to be classified according to the time slot; and displaying the information at corresponding time slots on a screen.

The controlling may comprise controlling information contained in a predetermined category to be classified in a predetermined time slot.

The time slot may be one of the time of the day, day of the week, month or time of the year.

The method may further comprise receiving a broadcast signal transmitted from a broadcast station; and performing signal processing so that the broadcast signal is displayed together with the information on the screen.

The receiving may comprise receiving the information via the Internet.

The information may comprise Really Simple Syndication (RSS) information.

The method may further comprise receiving a user command to classify the information in the predetermined category in the predetermined time slot.

According to another aspect of the present invention, there is provided an information providing method of a web server, the method comprising determining whether updated information exists among collected information; classifying the updated information according to the time slot; and transmitting the information classified in predetermined time slots at the corresponding time slots.

The classifying may comprise classifying information contained in a predetermined category in a predetermined time slot.

The time slot may be one of the time of the day, day of the week, month or time of the year.

The information may comprise Really Simple Syndication (RSS) information.

The method may further comprise receiving a user request for the information contained in the predetermined category at the predetermined time slot.

The above and/or other aspects of the present invention will be more apparent by describing certain exemplary embodiments of the present invention with reference to the accompanying drawings, in which:
FIG. 1 is a diagram explaining functions of a conventional image display apparatus;
FIG. 2 is a block diagram schematically showing the configuration of an image display apparatus according to a first exemplary embodiment of the present invention;
FIG. 3 is a diagram explaining an information processing method of the image display apparatus according to the first exemplary embodiment of the present invention;
FIG. 4 is a view explaining operations of the image display apparatus according to the first exemplary embodiment of the present invention;
FIG. 5 is a flowchart explaining operations of the image display apparatus according to the first exemplary embodiment of the present invention;
FIG. 6 is a flowchart explaining an information providing method using an image display apparatus according to a second exemplary embodiment of the present invention;
FIG. 7 is a block diagram schematically showing the configuration of an image display apparatus according to a third exemplary embodiment of the present invention;
FIG. 8 is a flowchart explaining operations of the image display apparatus according to the third exemplary embodiment of the present invention; and
FIG. 9 is a flowchart explaining an information providing method using an image display apparatus according to a fourth exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

FIG. 2 is a block diagram schematically showing the configuration of an image display apparatus 100 according to a first exemplary embodiment of the present invention.

In FIG. 2, the image display apparatus 100 comprises a broadcast signal receiver 110, a broadcast signal processor 120, a display unit 130, a Really Simple Syndication (RSS) information receiver 140, an RSS information processor 150, a user interface unit 160, a storage unit 170 and a controller 180.

The broadcast signal receiver 110 receives a broadcast signal transmitted from a broadcast station (not shown), and tunes to a broadcast signal of a channel selected by a user.

The broadcast signal processor 120 demodulates the tuned broadcast signal into a baseband signal, performs signal processing and outputs the processed signal.

The display unit 130 displays RSS information processed by the RSS information processor 150 together with the processed broadcast signal on a screen.

The RSS information receiver 140 receives various types of RSS information transmitted from a web server (not shown) via a communication network such as the Internet. Here, the RSS information is related to categories such as weather reports, traffic reports, news, cooking or the like, and is transmitted from the web server every time content is updated.

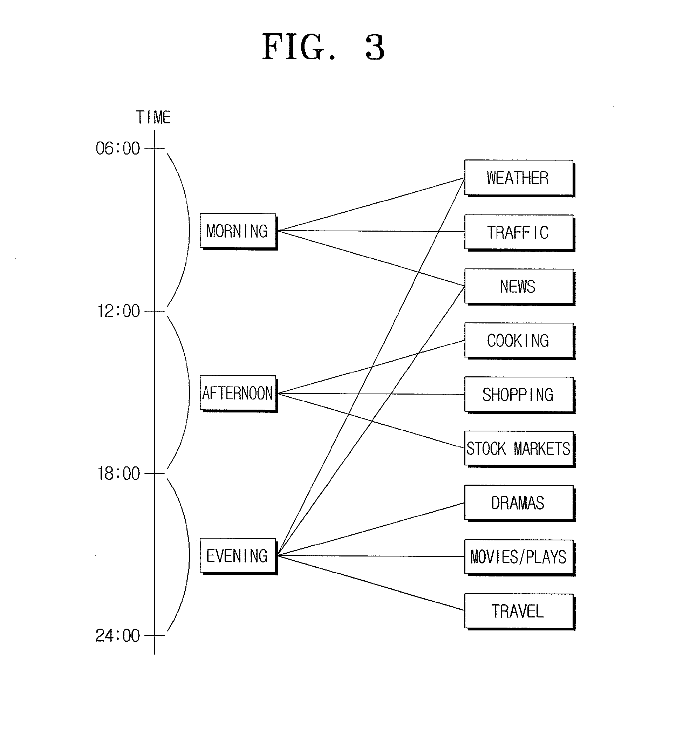

The RSS information processor 150 classifies the RSS information received by the RSS information receiver 140 according to the time slot, under the control of the controller 180, and performs signal processing so that the RSS information may be displayed on the display unit 130. For example, as shown in FIG. 3, the RSS information processor 150 allocates RSS information corresponding to weather reports, traffic reports and news in the morning slot, RSS information corresponding to cooking, shopping and stock market information in the afternoon slot, and RSS information corresponding to weather reports, news, dramas, movies/plays and travel in the evening slot, from among the RSS information received by the RSS information receiver 140.

The user interface unit 160 receives a user set command to classify the RSS information according to the time slot, and transfers the received command to the controller 180. As shown in FIG. 3, the user may set so that the RSS information corresponding to weather reports, traffic reports and news is classified in the morning slot, the RSS information corresponding to cooking, shopping and stock market information is classified in the afternoon slot, and the RSS information corresponding to weather reports, news, dramas, movies/plays and travel is classified in the evening slot. The user interface unit 160 may transfer the user set command to the controller 180.

The storage unit 170 stores the RSS information classified according to the time slot and a program which performs a function of classifying the RSS information according to the time slot. In other words, the setup state in response to the user set command received through the user interface unit 160 is stored in the storage unit 170. Additionally, according to the setup state, the RSS information corresponding to a category classified as the morning slot, the RSS information corresponding to a category classified as the afternoon slot, and the RSS information corresponding to a category classified as the evening slot are also stored in the storage unit 170. The RSS information stored in the storage unit 170 is the last updated information.

The controller 180 controls the RSS information processor 150 to classify the RSS information for a predetermined category in a predetermined time slot, and also controls the display unit 130 to display the RSS information classified in the predetermined time slot at the corresponding time slot. Specifically, the controller 180 controls the RSS information processor 150 to classify the RSS information received by the RSS information receiver 140 in the categories for each time slot which are set by the user, and stores the classified RSS information in the storage unit 170. Additionally, in order to display the RSS information corresponding to the set time slot on the display unit 130, the controller 180 controls the RSS information processor 150 to perform signal processing with respect to the RSS information stored in the storage unit 170 or the RSS information received by the RSS information receiver 140. In this situation, the controller 180 may function as a web client which requests the RSS information from the web server.

FIG. 3 is a diagram explaining an information processing method of the image display apparatus 100 according to the first exemplary embodiment of the present invention.

In FIG. 3, a time slot between 06:00 and 12:00 is set as a morning slot, a time slot between 12:00 and 18:00 is set as an afternoon slot, and a time slot between 18:00 and 24:00 is set as an evening slot. The RSS information corresponding to the weather reports, traffic reports and news is allocated to the morning slot, the RSS information corresponding to the cooking, shopping and stock market information is allocated to the afternoon slot, and the RSS information corresponding to the weather reports, news, dramas, movies/plays and travel is allocated to the evening slot.

As described above, the image display apparatus 100 classifies the RSS information provided from the web server, and provides a user with the weather reports, traffic reports and news at the time slot between 06:00 and 12:00, with the cooking, shopping and stock market information at the time slot between 12:00 and 18:00, and with the weather reports, news, dramas, movies/plays and travel at the time slot between 18:00 and 24:00.

Although the categories are classified according to the time slot in this exemplary embodiment of the present invention, the categories may also be classified according to the day of the week, month or time of the year.

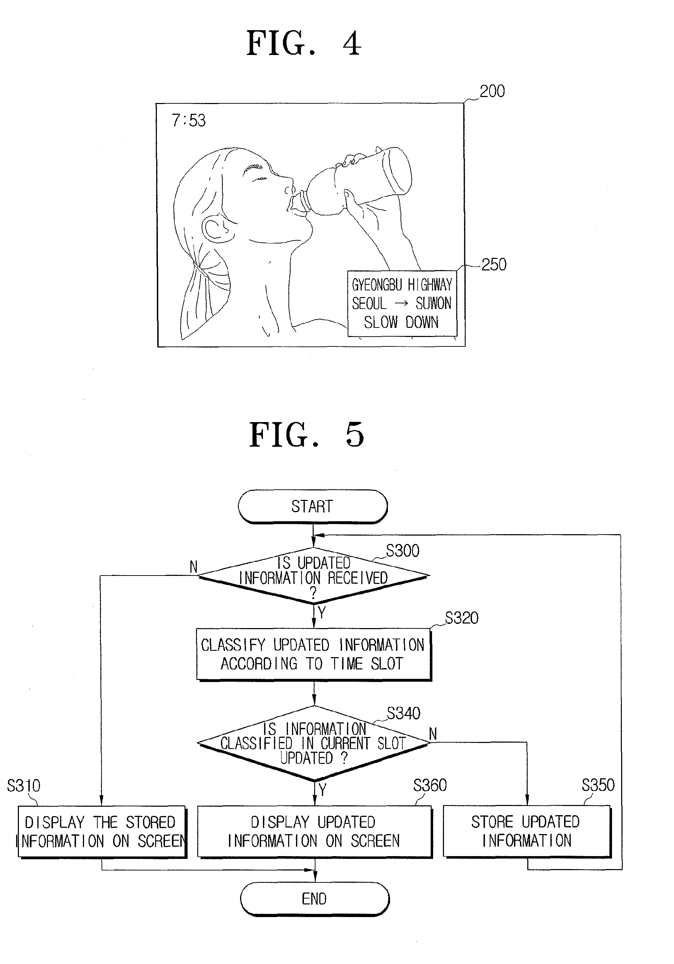

FIG. 4 is a view explaining operations of the image display apparatus 100 according to the first exemplary embodiment of the present invention.

In FIG. 4, the broadcast signal is displayed on a main screen 200, and the RSS information is displayed on a sub-screen 250. The RSS information displayed on the sub-screen 250 of FIG. 4 corresponds to the traffic reports set in the morning slot. As shown in FIG. 4, only the traffic reports set in the morning slot may be displayed on the sub-screen 250. Alternatively, although not shown in the drawings, the weather reports and news set in the morning slot may be displayed together with the traffic reports.

FIG. 5 is a flowchart explaining operations of the image display apparatus according to the first exemplary embodiment of the present invention.

In FIG. 5, if the updated information is received by the image display apparatus 100 from the web server when the user sets the image display apparatus 100 so that the RSS information is classified according to the time slot (S300), the image display apparatus 100 may classify the updated information according to the time slot (S320). The updated information refers to the RSS information transmitted from the web server every time the RSS information is updated.

If it is determined that information classified in a current slot is updated (S340-Y), the image display apparatus 100 may display the updated information on the screen (S360). For example, if the RSS information corresponding to traffic reports is classified in the morning slot and stored, and if the traffic reports are updated at 07:53, as shown in FIG. 4, the updated information may be displayed on the screen as soon as it is received. Therefore, the updated information may be provided to the user in real time.

If it is determined that information classified in the current slot has not been updated (S340-N), the image display apparatus 100 may store the updated information (S350). For example, if the RSS information corresponding to the traffic reports is classified in the morning slot and stored, and if the traffic reports are updated at 13:30, the updated information may be stored in the image display apparatus 100 without being displayed.

If the updated information is not received in operation S300, the image display apparatus 100 may display the stored information on the screen (S310). For example, if RSS information corresponding to the stock market information is classified in the afternoon slot and stored, and if there is no updated information at 13:30, the stored stock market information may be provided to the user.

The image display apparatus 100 may enable the RSS information to be provided to the user through the above-described process.

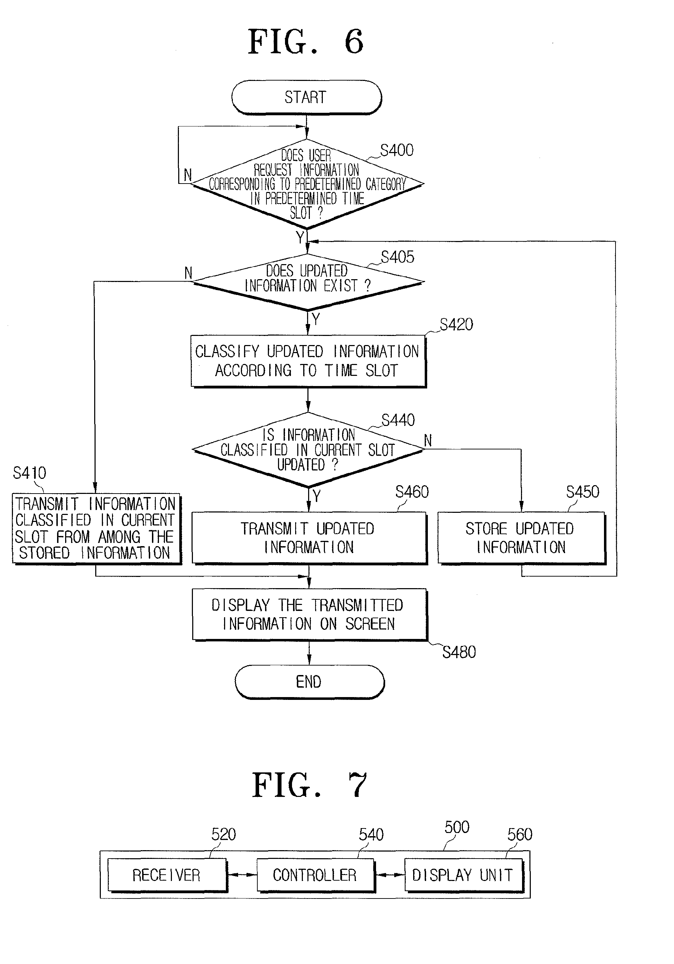

FIG. 6 is a flowchart explaining a real-time information providing method using an image display apparatus according to a second exemplary embodiment of the present invention.

Referring to FIG. 6, if a user requests the RSS information corresponding to the predetermined category classified in the predetermined time slot (S400), the image display apparatus 100 may determine whether the updated information exists among the collected information (S405). Accordingly, if a user request for the RSS information according to the time slot is received, a web server may receive the user request, and may set the state so that the RSS information is transmitted according to the time slot in response to the user request.

In this situation, if it is determined that updated information exists among the collected information, the web server may classify the updated information according to the time slot (S420). As shown in FIG. 3, the updated information may be distinguished according to the categories classified in each time slot.

If it is determined that the information classified in the current slot is updated (S440), the updated information may be transmitted to a client (S460). For example, if the RSS information corresponding to the traffic reports is classified in the morning slot and stored, and if the traffic reports is updated at 07:53, the updated information may be transmitted to the client.

If it is determined that the information classified in the current slot is not updated in operation S440, the updated information may be stored (S450). For example, if the RSS information corresponding to the traffic reports is classified in the morning slot and stored, and if the traffic reports are updated at 13:30, the updated information may be stored in the web server without being transmitted.

If the updated information is not received in operation S405, the web server may transmit the stored information (S410). For example, if the RSS information corresponding to stock market information is classified in the afternoon slot and stored, and if there is no updated information at 13:30, the stored stock market information may be provided to the client.

The transmitted information is displayed on the screen through the image display apparatus 100 and provided to the user (S480).

The image display apparatus 100 makes it possible to provide the user with the RSS information through the above-described process.

FIG. 7 is a block diagram schematically showing the configuration of an image display apparatus 500 according to a third exemplary embodiment of the present invention.

The image display apparatus 500 of FIG. 7 comprises a receiver 520, a controller 540 and a display unit 560.

The receiver 520 receives various types of RSS information transmitted from a web server (not shown) via a communication network such as an Internet. Here, the RSS information is related to categories such as weather reports, traffic reports, news, cooking or the like, and is transmitted from the web server every time the content is updated.

The controller 540 controls RSS information received by the receiver 520 to be classified according to the time slot and to be displayed on the display unit 560. For example, the controller 540 allocates RSS information corresponding to weather reports, traffic reports and news in the morning slot, RSS information corresponding to cooking, shopping and stock market information in the afternoon slot, and RSS information corresponding to weather reports, news, dramas, movies/plays and travel in the evening slot, from among the RSS information received by the receiver 520. In this situation, the controller 540 may function as a web client which requests the RSS information from the web server.

The display unit 560 displays a processed broadcast signal together with processed RSS information on a screen under the control of the controller 540. Accordingly, the display unit 560 may display the classified RSS information on the screen according to the time slot, so that the user can check whether there is desired information for each time slot.

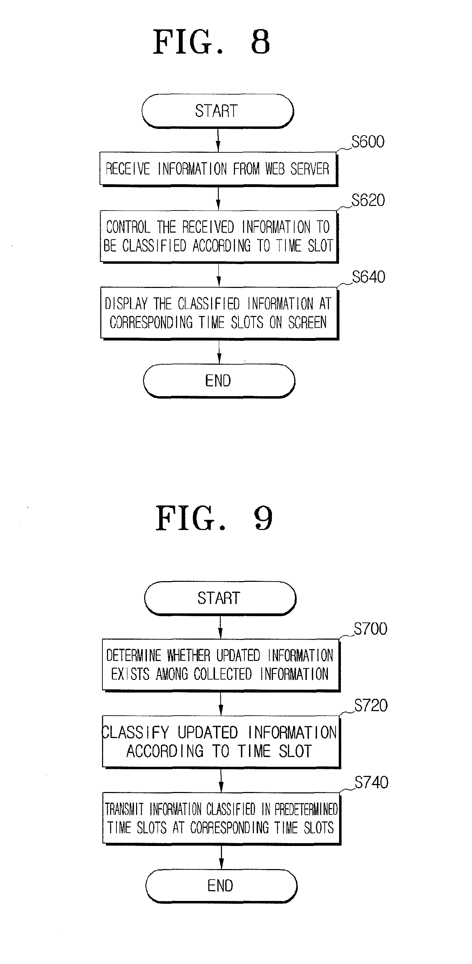

FIG. 8 is a flowchart explaining operations of the image display apparatus according to the third exemplary embodiment of the present invention.

In FIG. 8, the image display apparatus 500 receives the RSS information from the web server (S600). Specifically, the receiver 520 receives the various types of RSS information transmitted from the web server via a communication network such as the Internet. The image display apparatus 500 then controls the received information to be classified according to the time slot (S620), and displays the classified information at corresponding time slots on the screen (S640).

In more detail, the controller 540 classifies the RSS information received by the receiver 520 according to the time slot, and controls the display unit 560 to display the classified RSS information at corresponding time slots on the screen. As a result, the image display apparatus may provide the user with the RSS information classified according to the time slot.

FIG. 9 is a flowchart explaining an information providing method using an image display apparatus according to a fourth exemplary embodiment of the present invention.

In FIG. 9, a web server determines whether updated information exists among the collected information (S700), classifies the updated information according to the time slot (S720), and transmits the information classified in predetermined time slots at the corresponding time slots (S740).

In more detail, the web server determines whether there is updated information among the collected information, and classifies the updated information according to the time slot. The web server transmits the updated information classified according to the time slot at the corresponding time to provide the user with the information. In this situation, the user request for the information corresponding to the predetermined category in the predetermined time slot may have already been received, and thus the updated information may be classified in various time slots in response to the user request.

Therefore, it is possible to provide RSS information required by a user according to the time slot.

According to the exemplary embodiments of the present invention as described above, RSS information required by a user is automatically sorted according to the time slot from among RSS information, and provides a user with the sorted RSS information, so that the user can more easily and rapidly check desired information at a desired time slot.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations within the scope of the claims will be apparent to those skilled in the art.

## Claims

1. An image display apparatus comprising:
a receiver (140) configured to receive information in from a web server;
a controller (180) configured to:
cause each of a plurality of predetermined information categories to be associated with one of a plurality of predetermined display time slots;
cause the received information to be categorized into one of the plurality of predetermined information categories;
cause all received information categorized in a first of the predetermined information categories to be allocated to the display time slot associated with the first information category;
cause all received information categorized in a second of the predetermined information categories to be allocated to the display time slot associated with the second information category; and
a display unit (130);
wherein the controller (180) is configured to cause the information to be displayed on a screen of the display unit (130) in the time slot to which the information has been allocated.
wherein the time slot is at least one of a morning time slot, an afternoon time slot and an evening time slot.

2. The image display apparatus as claimed in claim 1, further comprising an information processor (150) controlled by the controller (180) to classify the information and to process the information for display.

3. The image display apparatus as claimed in any one of the preceding claims, wherein the controller (180) functions as a web client which requests the information from the web server.

4. The image display apparatus as claimed in any one of the preceding claims, wherein the time slot is one of the time of the day, day of the week, month or time of the year.

5. The image display apparatus as claimed in any one of the preceding claims, further comprising:
a broadcast signal receiver (110) configured receive a broadcast signal transmitted from a broadcast station; and
a broadcast signal processor (120) configured to perform signal processing so that the broadcast signal is displayed together with the information on the display unit (130).

6. The image display apparatus as claimed in any one of the preceding claims, wherein the receiver (140) is configured to receive the information via the Internet.

7. The image display apparatus as claimed in any one of the preceding claims, wherein the information comprises Really Simple Syndication (RSS) information.

8. The image display apparatus as claimed in any one of the preceding claims, further comprising a user interface unit (160) configured to receive a user command to classify the information in the predetermined category in the predetermined time slot.

9. An information providing method of an image display apparatus, the method comprising:
receiving information from a web server;
associating a plurality of predetermined information categories to different ones of a plurality of predetermined display time slots;
categorizing the received information into one of the plurality of predetermined information categories,
allocating all received information in a first of the predetermined information categories to the display time slot associated with the first information category;
allocating all received information in a second of the predetermined information categories to the display time slot associated with the second information; and
displaying the information in the time slots to which the information has been allocated on a screen,
wherein the time slot is at least one of a morning time slot, an afternoon time slot and an evening time slot.

10. The method as claimed in claim 9, wherein the time slot is one of the time of the day, day of the week, month or time of the year.

11. The method as claimed in claims 9 or 10, further comprising:
receiving a broadcast signal transmitted from a broadcast station; and performing signal processing so that the broadcast signal is displayed together with the information on the screen.

12. The method as claimed in any one of claims 9 to 11, wherein the receiving comprises receiving the information via the Internet.

13. The method as claimed in any one of claims 9 to 12, wherein the information comprises Really Simple Syndication (RSS) information.

14. The method as claimed in any one of claims 9 to 13, further comprising receiving a user command to classify the information in a predetermined category in a predetermined time slot.

15. An information providing method of a web server, the method comprising:
associating a plurality of predetermined information categories with different ones of a plurality of predetermined transmission time slots;
determining whether collected information allocated to the plurality of predetermined information categories has been updated with updated information, allocating the updated information in a first of the plurality of predetermined information categories to the predetermined transmission time slots associated with the first category of information
allocating the updated information in a second of the plurality of predetermined information categories to the predetermined transmission time slot associated with the second category of information; and
transmitting the information in the allocated predetermined time slots.
wherein the time slot is at least one of a morning time slot, an afternoon time slot and an evening time slot.

16. The method as claimed in claim 15, wherein the time slot is one of the time of the day, day of the week, month or time of the year.

17. The method as claimed in claim 15 or 16, wherein the information comprises Really Simple Syndication (RSS) information.

18. The method as claimed in claim 15, 16 or 17, further comprising receiving a user request for the information contained in a predetermined category at a predetermined time slot.
